(19) Europäiscnes Patentamt
European Patent Office
Office européen des brevets

(11) Publication number: 0 001 843
A1

# EUROPEAN PATENT APPLICATION

(21) Application number: 78101317.2

(22) Date of filing: 04.11.78

(51) Int. Cl.$^2$: C 08 F 220/10
//(C08F220/10)C08F22

(30) Priority: 07.11.77 US 848844

(43) Date of publication of application: 16.05.79 Bulletin 79/10

(84) Designated contracting states: BE DE FR NL

(71) Applicant: The B.F. Goodrich Company
500 South Main Street
Akron, Ohio 44318(US)

(72) Inventor: DeMarco, Robert Dominic
178 Beachwood Avenue
Avon Lake, Ohio 44012(US)

(74) Representative: von Kreisler, Alek, Dipl.-Chem. et al,
Deichmannhaus am Hauptbahnhof
D-5000 Köln 1(DE)

(54) **Acrylate ester copolymer elastomers.**

(57) Acrylic ester elastomers are prepared by polymerizing together a major amount of an acrylic ester monomer and a minor amount of 2,3-dibromopropyl acrylate monomer optionally with another vinylidene monomer. When admixed with vulcanizing agents, the elastomers exhibit improved scorch resistance even during extended processing, and when vulcanized, provide improved oil resistance and low temperature properties.

EP 0 001 843 A1

Croydon Printing Company Ltd.

# ACRYLATE ESTER COPOLYMER ELASTOMERS

## BACKGROUND OF THE INVENTION

Polyacrylic ester elastomers having a reactive halide cure site are known. Such polymers are vulcanized through the halide cure site using various polyamines and sulfur/fatty acid soap systems. Although these vulcanizates are useful, the elastomer/curative combinations often undergo premature cure, or scorch, during processing and forming operations. This causes the elastomer to stiffen or toughen, making it difficult to process and resulting in incomplete mold filling, vulcanizates having poor appearance and poor physical properties, and generally in waste of elastomer, curatives, and other compounding ingredients. Lower temperatures may be employed to increase processing safety but this results in increased handling time per article and decreased output. A more favorable solution would be to obtain increase processing safety without increasing processing or cure times.

## SUMMARY OF THE INVENTION

Elastomeric acrylate ester polymers, comprised of at least 50 percent by weight of any acrylic ester, from about 0.5 percent to about 20 percent by weight of 2,3-dibromopropyl acrylate, and up to 30 percent by weight of other copolymerizable vinyl monomer containing a terminal vinylidene group, exhibit improved processing safety when admixed with curatives and when vulcanized exhibit improved oil resistance and low temperature properties. These novel copolymers can also be vulcanized with cure systems that are not effective with some chlorine-containing copolymers.

## DETAILED DESCRIPTION

The novel elastomers are obtained by copolymerizing together a major amount of acrylate ester monomer with the 2,3-dibromopropyl acrylate monomer.

The acrylate ester monomers having the formula

$$CH_2=CH-\overset{\overset{\large O}{\|}}{C}-OR$$

where R is selected from the group consisting of an alkyl

radical containing 1 to 18 carbon atoms, an alkoxyalkyl radical containing a total of 1 to 10 carbon atoms, and a cyanoalkyl radical containing 1 to 20 carbon atoms. The alkyl structure can contain primary, secondary, or tertiary carbon configurations. Examples of such acrylic esters are ethyl acrylate, propyl acrylate, n-butyl acrylate, isobutyl acrylate, n-pentyl acrylate, isoamyl acrylate, n-hexyl acrylate, 2-methylpentyl acrylate, n-octyl acrylate, 2-ethylhexyl acrylate, n-decyl acrylate, n-dodecyl acrylate, n-octadecyl acrylate, and the like; methoxymethyl acrylate, methoxyethyl acrylate, ethoxyethyl acrylate, butoxy ethyl acrylate, ethoxypropyl acrylate, and the like; α and β-cyanoethyl acrylate, α,β- and γ-cyanopropyl acrylate, cyanobutyl acrylate, cyanohexyl acrylate, cyanooctyl acrylate, and the like; or mixtures thereof.

More preferred are the acrylic esters wherein R is an alkyl radical containing 2 to about 10 carbon atoms or an alkoxyalkyl radical containing a total of 2 to about 6 carbon atoms. Examples of such more preferred monomers are ethyl acrylate, propyl acrylate, n-butyl acrylate, n-pentyl acrylate, n-hexyl acrylate, n-octyl acrylate, 2-ethylhexyl acrylate, and the like; methoxyethyl acrylate, ethoxyethyl acrylate, and the like; and mixtures thereof.

The acrylic ester monomers are used in amounts of at least 50 percent by weight of the total weight of monomer charged. More preferably, they are used in the range from about 70 percent to about 99 percent by weight of the monomers charged.

The 2,3-dibromopropyl acrylate monomer is used in the range from about 0.5 percent to about 20 percent by weight based upon the total weight of the monomers charged, and more preferably from about 1 percent to about 5 percent by weight.

Other vinyl monomers containing a terminal vinylidene group ($CH_2$=C< ) can be polymerized with the acrylate esters as long as an elastomeric polymer is obtained. These monomers are normally used in amount up to about 10 percent

by weight based on the total weight of monomers charged. Examples of such monomers are vinyl and allyl ethers such as vinyl methyl ether, vinyl ethyl ether, allyl methyl ether, and the like; vinyl and allyl esters such as vinyl acetate, vinyl propionate, allyl acetate, allyl laurate, and the like; vinyl ketones such as methyl vinyl ketone, ethyl vinyl ketone, methyl isopropenyl ketone, hydroxymethyl vinyl ketone, and the like; methyl acrylate, cyclohexyl acrylate, phenyl acrylate, and the like; methacrylates such as methyl methacrylate, ethyl methacrylate, hexyl methacrylate, and the like; vinyl aromatics such as styrene and its alkyl and halo substituents, vinyl toluene, and the like; vinyl halides such as vinyl chloride, vinylidene chloride, and the like; vinyl nitriles such as acrylonitrile and methacrylonitrile; unsaturated acids such as acrylic acid, methacrylic acid, maleic acid, itaconic acid; β-cyanoalkyl acrylates as ethyl, and the like; and also dienes and divinyls such as butadiene, isoprene, 1,4-hexadiene, and the like, and divinyl ether, diallyl ether, divinyl benzene, diethylene glycol diacrylate, and the like; divinyl benzene and mixtures thereof.

The more preferred copolymerizable monomers are vinyl acetate, methyl and ethyl methacrylate, vinyl chloride, vinylidene chloride, styrene, acrylonitrile, acrylic and methacrylic acid. The use of these monomers contributes favorably to specific properties of the novel acrylic ester elastomers such as solvent and oil resistance, flame retardancy, and the like. A useful combination of acrylic esters is at least 35 percent of an alkyl acrylate(s) and up to 64 percent by weight of an alkoxy acrylate(s) based on the weight of monomer charged.

The acrylate ester elastomers can be prepared using emulsion, suspension, solution, and the bulk techniques, all known to those skilled in the art. The monomers are usually polymerized to 90 percent conversion or over. Emulsion and suspension techniques are usually employed. The polymerization can be performed as batch reactions, or one or more ingredients can be proportioned during the run, or continually. Temperatures of polymerization normally range from about -10°C. to about 95°C., whereas a more preferred range is from about 5°C. to about 50°C. The polymerizations are preferably conducted in the absence of air or oxygen.

The polymerization may be initiated by free-radical generating agents. Examples of such agents are organic peroxides and hydroperoxides such as benzoyl peroxide, dicumyl peroxide, cumene hydroperoxide, paramethane hydroperoxide, and the like; used alone or with redox systems; azo compounds such as azobisisobutyronitrile, and the like; persulfate salts such as sodium, potassium, and ammonium persulfate, used alone or with redox systems; and the use of ultraviolet light with photosensitive agents such as benzophenone, triphenylphosphine, organic azos, and the like. The monomers also copolymerize rapidly on heating alone.

Typical emulsion polymerization ingredients would include a persulfate salt or an organic peroxide, including redox systems, water adjusted to a desired pH with acids or bases, and usually buffered with inorganic salts, and either anionic, cationic, or nonionic surface active agents. Examples of such surface active agents are sodium, potassium, sulfonate, and phosphate esters of fatty acids, and alkyl and alkaryl salts, quaternary ammonium salts, polyglycol fatty acid esters, polyoxyethylated alkylated phenols, and the like, and may even be substantially emulsifier-free.

The resulting latices are stable emulsions, and may be handled and used as such. For example, they may be used to impregnate papers and other nonwoven materials to impart water resistance or increased wet and solvent tensile strength to the nonwoven. The latices can be coagulated to isolate the elastomer. Typical coagulation procedures are salt/acid coagulations; the use of polyvalent metal salts such as $CaCl_2$, $MgSO_4$, $Al_2(SO_4)_3$, and $AlCl_3$; use of alcohols such as methanol; freeze agglomeration, and the like. The

elastomer obtained is usually washed with water and dried.

The polymers are solid elastomers having a dilute solution viscosity (DSV) of over 0.5 as measured on a 0.4 percent by weight of polymer solution in methylethyl ketone. The DSV is measured on the soluble portion of the polymer. Percent gel, or insolubles, of the polymers range from about 0% to over 60% by weight of the polymer. Raw polymer Mooney values range preferably from about 20 to about 150 as measured at 212°F. using a large rotor (ML-4, 212°F.). The polymers contain from about 0.2 percent to about 12.0 percent by weight of bromine as provided by 2,3-dibromopropyl acrylate, and more preferably from about 0.5 percent to about 3.0 percent by weight of bromine.

The polymers are readily admixed with vulcanizing agents, and other compounding ingredients using two-roll mills, internal mixers such as Banburys and extruders, and like equipment.

Examples of vulcanizing agents are primary and secondary polyamines such as hexamethylenediamine carbamate, triethylenediamine, triethylenetetraamine, N,N'-dicinnamylidene-1,6-hexanediamine, and the like; lead peroxide, lead tetraoxide, sulfur donors such as dipentamethylenethiuram hexasulfide, triethylthiuram disulfide, 2-mercaptoimidazoline, and the like, dithiocarbamates used with trithiocyanuric acid; and ammonium salts of acids such as ammonium benzoate, ammonium adipate, ammonium stearate, other compounding ingredients usually mixed with the polymers are stabilizers and antioxidants such as hindered phenols, phosphated phenols, and amines like phenyl-β-naphthylamine, and the like; fillers such as carbon blacks, clays, silicas, asbestos, fiberglass, and the like; plasticizers, waxes, and oils; processing aids; and other ingredients known to those skilled in the art.

The elastomers are cured at a temperature from about 250°F. to about 450°F., whereas a temperature range from about 275°F. to about 400°F. is more preferred. Cure time varies with cure temperature, ranging from about 2

minutes at 400°F. to over 20 minutes at 270°F. The polymers are typically tempered for about 1 hour to about 24 hours at a temperature from about 300°F. to about 400°F.

The previously known acrylic ester elastomer compositions having halogen cure sites have a tendency to precure after the vulcanizing agents have been admixed. The phenomenon is called scorching, and it is evidenced by the polymer becomming tough and hard to process. Lower processing temperatures and the use of slow-curing vulcanizing agents can increase processing safety but this also results in increased operating time per unit and lower productivity. The elastomers of this invention provide increased process safety without increasing total processing or cure time. The use of the novel elastomers is particularly advantageous in injection molding and extrusion processes, as higher temperatures can be employed without fear of scorching the polymer.

The scorch time can be determined by following ASTM Procedure D 1646. This method covers the use of a shearing disk viscometer, commonly called Mooney viscometer, when applied to rubber or other elastomeric materials. The onset of vulcanization can be detected by an increase in viscosity. The scorch (or maximum processing) time at a given temperature is determined by the time required for a given increase above the minimum. When a large rotor is used the increment is 5 units ($t_5$). The cured vulcanizates of these elastomers have the heat resistance, oil resistance, and oxygen and ozone resistance characteristic of polyacrylic ester elastomers, and are useful to prepare gaskets, seals, packings, coatings, and the like.

The following examples further illustrate the invention. Ingredients are given in parts by weight unless otherwise indicated. Testing was conducted according to ASTM procedures. Tensile and elongation followed ASTM D412; hardness, ASTM D676 (Durometer A); oil aging and swell, ASTM D471; and raw polymer Mooney following ASTM D1646, run as ML-4-212°F. The test for scorch time determination was

previously defined.

EXAMPLE I

Two different copolymers of ethyl acrylate and 2,3-dibromopropyl acrylate were prepared using the following recipe:

| | 1 | 2 |
|---|---|---|
| Ethyl Acrylate | 96.0 | 98.0 |
| 2,3-dibromopropyl acrylate | 4.0 | 2.0 |
| Gafac PE 510[1] | 2.0 | 2.0 |
| NaOH | 0.1 | 0.1 |
| $Na_2SO_4$ | 0.3 | 0.3 |
| Daxad 17[2] | 0.5 | 0.5 |
| Hampene 100[3] | 0.024 | 0.024 |
| Hampshire NaFe[4] | 0.01 | 0.01 |
| $Na_2S_2O_4$ | 0.02 | 0.02 |
| Sodium formaldehyde sulfoxalate | 0.04 | 0.04 |
| Paramethane hydroperoxide | 0.07 | 0.07 |
| Water | 100.0 | 100.0 |
| Temperature, °C. | 19.5 | 19.5 |
| Percent conversion | 98.8 | 99.0 |
| Raw Polymer Mooney, ML-4-212°F. | 70 | 64 |
| DSV | 1.59 | 1.74 |
| Percent gel (MEK) | 58 | 54 |

1 - alkylphenoxypolyethyleneoxyethyl ester of phosphoric acid

2 - sodium salt of polymerized naphthalene sulfonic acid

3 - tetrasodium ethylenediamine tetracetate

4 - sodium ferric salt of ethylene-diamine tetracetic acid

The acrylic ester monomer(s), the vinyl benzyl chloride, Gafac PE510, NaOH, Daxad 17, Hampshire NaFe, and one-half of the water were charged to a premix tank and agitated. The remainder of the water and the Hampene 100 and the $Na_2SO_4$ were charged to a reactor vessel equipped for agitation. About 5 percent by weight of the premix solution was then charged to the reactor followed by the $Na_2S_2O_4$, the sodium formaldehyde sulfoxalate, and the paramethane hydroxide.

The reactor was evacuated of air, closed and the emulsion agitated. The remainder of the premix solution was proportioned into the reactor over two hours time.

Portions of the dried polymers were compounded with 100 weight parts of polymer, 2 weight parts of N,N'-ethylenebisstearamide, 65 weight parts of FEF carbon black, 5 weight parts lead tetroxide, 3 weight parts of 2-mercaptoimidazoline. Rheometer test values at 170°C., 900 cpm, 3° arc. square die - 20 minutes were: ML, lbf·in. (1) 25.5, (2) 24.5; $ts_2$ min. (1) 5.5, (2) 6.0; M(H) lbf·in. (1) 45.5, (2) 36.0; M Δ lbf·in. (1) 20.0, (2) 11.5. Portions of these compounds were cured for 10 minutes at 338°F. The resulting vulcanizates had 100% moduli of (1) 600 psi and (2) 320 psi, tensile strengths of (1) 1620 psi and (2) 1330 psi and elongations of (1) 300% and (2) 510%. Vulcanized samples were first heated (tempered) for 3 hours at 347°F. and then heated (air aged) in open tubes for 70 hours at 375°F. The tensile strengths after this aging were (1) 1590 psi and (2) 1460 psi and both samples passed a 180° bend. These two polymers were also readily cured with hexamethylene diamine carbamate used in place of the lead tetroxide and 2-mercaptoimidazoline. These vulcanizates had tensile strengths of (1) 1300 psi and (2) 1100 psi, elongations of (1) 400% and (2) 500% and 100% moduli of (1) 380 psi and (2) 290 psi. After air aging as above, the tensile strength of the samples were 1830 psi and 1600 psi and both samples passed a 180° bend test. That these copolymers can be cured with red lead is a surprising and valuable property. This system provides a more stable stock with improved scorch resistance and safer processing time. These vulcanizates have better oil resistance than comparable acrylate polymers. This is observed in the low volume change in ASTM #3 oil. For polymer (1) above after aging 70 hrs. at 302°F. in ASTM #3 oil, the volume change was +12.5% vs. more typical +15% for previous polyacrylates.

When these examples are repeated with 5 to 10 parts of the ethyl acrylate replaced with butyl acrylate, methyl methacrylate, acrylonitrile or styrene, copolymers vulcanized having similar excellent cured physical properties are obtained.

EXAMPLE II

Another series of copolymers were prepared following the general procedure of Example I, in this case prepared with (1) 96 weight parts of ethyl acrylate and 4 weight parts of 2,3-dibromopropyl acrylate and (2) 95 weight parts ethyl acrylate and 4 weight parts 2,3-dibromopropyl acrylate and 1 weight part methacrylic acid. The resulting polymers had Mooney viscosity values of (1) 70 and (2) 82. 100 weight parts of samples of these two copolymers were compounded with 2 weight parts of N,N'-ethylenebis stearamide, 65 weight parts of FEF carbon black, 5 weight parts of lead tetroxide and 4 weight parts of 2-mercaptoimidazoline. The compounds had Mooney viscosities of (1) 83 and (2) 84 minutes at 131°C. with a large rotor. Rheometer data obtained on these compounds were: ML, lbf·in. (1) 25.5, (2) 26.0; $ts_2$ min. (1) 5.5, (2) 6.5; M(H), lbf·in. (1) 45.5, (2) 39.5; $M\Delta$ lbf·in. (1) 20.0, (2) 13.0. After curing for 10 minutes and 338°F. in a press, the vulcanizates had 100% moduli of (1) 600 psi and (2) 400 psi, tensile strengths of (1) 1620 psi and (2) 1470 psi, elongations of (1) 300% and (2) 400% and hardness values of (1) 70A and (2) 68A. Samples tempered 3 hrs. at 347°F. and aged for 70 hrs. at 375°F. had tensile strengths of (1) 1590 psi and (2) 1560 psi, hardness values of (1) 86A and (2) 84A and passed a 180° bend test. After exposure to ASTM #3 oil for 70 hours at 150°C. 100% moduli were (1) 1430 psi and (2) 980 psi, tensile strengths (1) 1670 psi and (2) 1990 psi; elongations of (1) 120% and (2) 170%, and hardness of (1) 69A and (2) 63A, and both samples passed a 180° bend test.

Quite surprisingly, copolymers of ethyl acrylate containing 1-5 weight percent of (1) vinyl benzyl chloride, or (2) vinyl chloroacetate have very poor scorch safety when using the lead tetroxide and 2-mercaptoimidazoline cure system, and copolymers of ethyl acrylate containing 1-5 weight percent of cyclolchloroacetate or epoxy types (e.g., glycidyl acrylate) exhibit very poor cures using this cure system.

EXAMPLE III

Another series of copolymers were prepared following the procedure and using the recipe of Example I with (1) 96 weight parts ethyl acrylate, 3.2 weight parts 2,3-dibromopropyl acrylate and 0.8 methacrylic acid, and (2) 95.6 weight parts ethyl acrylate, 3.2 weight parts 2,3-dibromopropyl acrylate and 1.2 weight parts cyanoethyl acrylate. The resulting copolymers obtained in good yield after drying had Mooney values of 69 ML. Portions of the dried copolymers were compounded based on 100 weight parts of copolymer of 2 weight parts of N,N'-ethylenebis stearamide, 1 weight part stearic acid, 65 weight parts FEF carbon black, 5 weight parts of (I) lead tetroxide and 3 weight parts of 2-mercaptoimidazoline. The resulting compound had Mooney viscosities of (1) 76 and (2) 68 at 250°F. and vulcanizates cured at 10 minutes and 338°F., 100% moduli 500 psi and 360 psi, tensile strengths of 1760 psi and 1400 psi, elongations of 350 and 450%. Samples after aging (tempering) for 3 hours at 347°F. and in air aging for 70 hours at 375°F. had tensile strengths of 1550 psi and 1600 psi, hardness of 89A and 86A and passed 180° bend. When these compounds were compounded with 1.5 weight parts (II) tetraethylene tetramine and mercaptobenzothiazole disulfide instead of the lead tetroxide and 2-mercaptoimidazoline moduli at 100% of (1) 520 and (2) 410 psi, tensile strengths of (1) 1740 and (2) 1460 psi, elongations of (1) 320% and (2) 380% and hardness values of (1) 68A and (2) 67A were obtained. Rheometer data obtained on the compounds were:

| Copolymer | 1 | 1 | 2 | 2 |
|---|---|---|---|---|
| Cure System | I | II | I | II |
| ML, lbf·in. | 25.5 | 25.5 | 23.0 | 23.5 |
| $ts_2$, min. | 4.2 | 3.4 | 4.5 | 4.2 |
| M(H), lbf·in. | 44.5 | 40.0 | 41.5 | 34.0 |
| M $\Delta$, lbf· in. | 19.0 | 14.5 | 18.5 | 10.5 |

The rheometer data shows that a reasonable state of cure and processing safety can be obtained with both polymers in both cured systems.

These copolymers find applications where the normal acrylic ester polymers are used, and because of the good heat aging and oil resistance, and adaptability to a useful cure system, find particular utility in automotive oil seals, oil resistant hoses, oil resistant rolls, wire covering and jacketing, and the like.

## CLAIMS

I CLAIM:

1. An elastomer comprising (A) at least 50 percent by weight of an acrylic ester of the formula

H O
' "
$CH_2$=C-C-O-R

wherein R is selected from the group consisting of an alkyl radical containing 1 to 18 carbon atoms, an alkoxyalkyl radical containing 1 to 10 carbon atoms in the radical, and a cyanoalkyl radical containing 1 to 20 carbon atoms, (B) from about 0.1 percent to about 20 percent by weight of 2,3-dibromopropyl acrylate.

2. A composition of Claim 1 wherein R contains 1 to 8 carbon atoms and (B) is present in amount from about 0.5 to 10 weight percent.

3. A composition of Claim 2 wherein R contains 2 to 5 carbon atoms and (B) is present in amount from 1 to 5 weight percent.

4. An elastomer of Claim 3 comprising from about 95 percent to about 99 percent by weight of ethyl acrylate and from about 1 percent to about 5 percent by weight of 2,3-dibromopropyl acrylate.

5. An elastomer of Claim 1 comprising (A) at least 50 percent by weight of an acrylic ester of the formula

H O
' "
$CH_2$=C-C-O-R

wherein R is selected from the group consisting of an alkyl radical containing 1 to 18 carbon atoms, an alkoxyalkyl radical containing 1 to 10 carbon atoms in the radical, and a cyanoalkyl radical containing 1 to 20 carbon atoms, (B) from about 0.1 percent to about 20 percent by weight of 2,3-dibromopropyl acrylate and (C) up to about 30 percent by weight of a

copolymerizable vinyl monomer containing a terminal vinylidene group, all weights based upon the weight of the polymer.

6. An elastomer of Claim 5 comprising at least 35 percent by weight of an acrylic ester wherein R is an alkyl radical containing 2 to about 10 carbon atoms, up to about 64 percent by weight of an acrylic ester wherein R is an alkoxyalkyl radical containing 2 to about 6 carbon atoms in the radical, and from about 1 percent to about 10 percent by weight of 2,3-dibromopropyl acrylate.

7. An elastomer of Claim 6 comprising up to about 10 percent by weight of a copolymerizable vinyl monomer selected from the group comprised of vinyl acetate, methyl acrylate, methyl methacrylate, ethyl methacrylate, styrene, vinyl chloride, vinylidene chloride, acrylonitrile, acrylic acid, and methacrylic acid.

8. An elastomer of Claim 7 comprising up to about 5 percent by weight of a copolymerizable vinyl monomer selected from the group comprised of acrylic acid or methacrylic acid.

9. An elastomer of Claim 2 comprising from about 39 percent to about 55 percent by weight of ethyl acrylate, from about 20 percent to about 30 percent by weight of n-butyl acrylate, from about 20 percent to about 30 percent by weight of methoxyethyl acrylate, and from about 1 percent to about 5 percent by weight of 2,3-dibromopropyl acrylate.

10. An elastomer of Claim 1 in a cured state.

11. A method of preparing an acrylic ester elastomer having improved processing safety comprising copolymerizing at least 50 percent by weight of an acrylic ester of the formula

$$CH_2=\overset{H}{\overset{|}{C}}-\overset{O}{\overset{\|}{C}}-O-R$$

wherein R is selected from the group consisting of an alkyl radical containing 1 to 18 carbon atoms, an alkoxyalkyl

radical containing 1 to 10 carbon atoms in the radical, and a cyanoalkyl radical containing 1 to 20 carbon atoms, (B) from about 0.1 percent to about 20 percent by weight of 2,3-dibromopropyl acrylate.

European Patent Office

# EUROPEAN SEARCH REPORT

Application number
EP 78 10 1317

## DOCUMENTS CONSIDERED TO BE RELEVANT

| Category | Citation of document with indication, where appropriate, of relevant passages | Relevant to claim |
| --- | --- | --- |
| X | US - A - 2 492 170 (W.C. MAST) * Claims 1,3; column 2, lines 7-41 * | |
| X | US - A - 2 568 659 (S.H. POWELL) * Claims 1,3,7; column 3, lines 53-66 * | |
| X | US - A - 2 993 033 (J.L. O'BRIEN) * Claims 1,4 * | |

CLASSIFICATION OF THE APPLICATION (Int. Cl.²)

C 08 F 220/10//
(C 08 F 220/10
-,220/22)

TECHNICAL FIELDS SEARCHED (Int.Cl.²)

C 08 F 220/10-
220/14
220/22

CATEGORY OF CITED DOCUMENTS

- X: particularly relevant
- A: technological background
- O: non-written disclosure
- P: intermediate document
- T: theory or principle underlying the invention
- E: conflicting application
- D: document cited in the application
- L: citation for other reasons
- &: member of the same patent family, corresponding document

X The present search report has been drawn up for all claims

| Place of search | Date of completion of the search | Examiner |
| --- | --- | --- |
| The Hague | 12-02-1979 | CAUWENBERG |